Europäisches Patentamt

European Patent Office

Office européen des brevets

(11) Publication number: **0 300 460 B1**

(19)

## EUROPEAN PATENT SPECIFICATION

(12)

(45) Date of publication of patent specification: **13.05.92**  (51) Int. Cl.⁵: **G01M 3/24**

(21) Application number: **88111705.5**

(22) Date of filing: **20.07.88**

(54) **Apparatus for detecting presence/absence of water leakage from water pipe.**

(30) Priority: **22.07.87 JP 180939/87**
**22.07.87 JP 180940/87**

(43) Date of publication of application:
**25.01.89 Bulletin 89/04**

(45) Publication of the grant of the patent:
**13.05.92 Bulletin 92/20**

(84) Designated Contracting States:
**DE FR GB**

(56) References cited:
**US-A- 3 019 650**

**PATENT ABSTRACTS OF JAPAN, volume 10, no. 68 (P-437)[2125]; & JP - A - 60 209 117 (TOSHIBA K.K.) 21-10-1985**

**PATENT ABSTRACTS OF JAPAN, volume 11, no. 42 (P-545)[2489], 6th February 1987; & JP - A - 61 213 647 (TOSHIBA CORP.) 22-09-1986**

**PATENT ABSTRACTS OF JAPAN, volume 11, no. 58 (P-550)[2505], 21st February 1987; & JP - A - 61 223 628 (TOSHIBA CORP.) 04-10-1986**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Saitoh, Susumu**
**c/o Patent Division Kabushiki Kaisha**
**Toshiba**
**1-1 Shibaura 1-chome Minato-ku Tokyo**
**105(JP)**
Inventor: **Taniguchi, Syozo**
**c/o Patent Division Kabushiki Kaisha**
**Toshiba**
**1-1 Shibaura 1-chome Minato-ku Tokyo**
**105(JP)**
Inventor: **Enomoto, Akio**
**c/o Patent Division Kabushiki Kaisha**
**Toshiba**
**1-1 Shibaura 1-chome Minato-ku Tokyo**
**105(JP)**
Inventor: **Matsuzawa, Teruyoshi**
**c/o Patent Division Kabushiki Kaisha**
**Toshiba**
**1-1 Shibaura 1-chome Minato-ku Tokyo**
**105(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**PATENT ABSTRACTS OF JAPAN, volume 11, no. 248 (P-604)[2695], 13th August 1987; & JP - A - 62 55539 (TOSHIBA CORP.) 11-03-1987**

Inventor: **Kubota, Takeji**
**c/o Patent Division Kabushiki Kaisha**
**Toshiba**
**1-1 Shibaura 1-chome Minato-ku Tokyo**
**105(JP)**

74 Representative: **Henkel, Feiler, Hänzel & Part-**
**ner**
**Möhlstrasse 37**
**W-8000 München 80(DE)**

## Description

The present invention relates to an apparatus for detecting the presence/absence of water leakage from a water pipe.

A large amount of water leaking from conduit pipes, service pipes and the like for carrying water from filtration plants, and reservoirs and the like for supplying to water consumers leads to a great loss. It is therefore necessary to detect the occurrence of water leakage and reduce the quantity of water leakage. However, it is difficult to find water leakage portions on the ground because most of the water leakage portions are present underground.

According to a conventional method of detecting underground water leakage, a vibration of a service pipe is amplified and converted into an audible tone, whereupon an inspector listens to the audible tone, and then judging the presence/absence of water leakage. According to this method, however, the inspector must attain a skill for distinguishing noise generated by water leakage from other types of unrelated noise. In addition, according to this method, the inspector must circulate within areas in which the conduit pipes are embedded and must check the presence/absence of water leakage, thus requiring much labor and time-consuming operations.

In order to overcome the above drawback, an apparatus for automatically detecting water leakage is disclosed in, e.g., PATENT ABSTRACTS OF JAPAN, vol. 10, no. 68 (P-437) (2125) and JP-A-60-209117. This leakage detecting apparatus detects the presence/absence of water leakage by utilizing the following facts. Once water leakage occurs, it cannot be naturally recovered. Unless water leakage is repaired, noise continuously occurs. More specifically, in the leakage detecting apparatus disclosed in the above disclosure, a sensor converts a vibration of a water pipe into an electrical signal, and the electrical signal is supplied to a waveform shaping circuit. The waveform shaping circuit absolute-value amplifies the electrical signal from the sensor, compares the electrical signal with a threshold level and converts it into a high level signal or low level signal. An integration circuit integrates the period of time that the output signal remains at high level within a predetermined period of time. A detection circuit detects water leakage when the integrated period of time exceeds a predetermined reference value.

Usually, the integration circuit is operated at nighttime (e.g., 1 AM to 4 AM) when unrelated outside noise is at a minimum. Thus, the probability of a water leakage detection error caused by unrelated outside noise is reduced. However, unrelated noise exists even at night-time. In particular, noise from nighttime construction and noise from a pump for pumping water from a water tank to a high-level water tank are often generated for relatively long periods of time. For this reason, when the conventional water leakage detecting apparatus is used near a site of nighttime construction or of a water tank pump, the apparatus erroneously detects water leakage.

A method of automatically detecting a position of water leakage is disclosed in Japanese Patent Publication No. 43-18600. According to the method of this publication, correlation between output signals from two sensors is obtained, and a time difference between the two output signals is used to determine the position of water leakage. According to this method, however, at least two sensors must be used to detect the position of water leakage. It is also difficult to perform measurement such as calculation of correlation between output signals from the two sensors. An apparatus arranged by using this method becomes bulky. With this method, however, a detection error may occur. When the water supplied through the service pipe is used, it may be detected as if the water were leaking from the pipe. Therefore, it is necessary to use this method at night when a relatively small amount of water is used.

Prior art document PATENT ABSTRACTS OF JAPAN, vol. 11, no. 58 (P-550) (2505) 21st February 87 and JP-A-61 223 628 describes a detector for leak of water in which a sensor detects a sound and the vibration generated on a water conduit pipe. The detected sound and vibration are converted into an electrical signal which is amplified with an amplifier, and a peak value is taken out and stored in a storing means. The stored data are compared with a selecting means, and the data of the lowest level are selected. When the leak of water happens, the lowest level is enlarged and compared with a preset value at the normal time with a comparing and alarming means to output an alarm when the difference attains over a specific value.

Further, prior art document PATENT ABSTRACTS OF JAPAN, vol. 11, no. 42 (P-545) (2489) 6th February 1987 and JP-A-61 213 647 discloses a detector for water leakage comprising a sensor, a wave form shaping circuit, a signal continuance integration circuit, and a water leak decision circuit. An oscillation caused by a water leaking sound, or noise detected by the sensor is converted into an electric signal which is supplied to shaping circuit. This shaping circuit amplifies the electric signal from the sensor and performs a wave form shaping so that a signal significant as a water leak signal has a high level and an insignificant signal has a low level. The integration circuit integrates the time when the input signal has a high level and outputs a time integral value T.

Further, the leak decision circuit stores the time integral value T when there is no water leakage and outputs a decision signal indicating a leakage of water only when the ratio of the integral value T to the time integral value or the integral value T is larger than a set decision reference value.

It is an object of the invention as defined in the Claims to provide an apparatus for detecting water leakage which can easily detect the distance between a water leakage position and the apparatus, and which is little influenced by noise.

To achieve these objects the invention as defined in the claims provides a water leakage detecting apparatus as specified in claims 1 and 11, respectively.

With an arrangement according to the apparatus of claim 1, a frequency of vibration detected by the vibration detection means can also be detected. A frequency of main vibration components of the vibrations propagating a water pipe or the like tends to be decreased when the distance is increased. Therefore, by detecting the frequency of the main vibration components, the distance between the water leakage position and the apparatus for detecting water leakage can be calculated.

With an arrangement according to the apparatus of claim 11, the presence/absence of water leakage is detected on the basis of an integration value obtained when unrelated noise is substantially at a minimum. Therefore, the presence/absence of water leakage can be accurately detected.

This invention can be more fully understood from the following detailed description when taken in conjunction with the accompanying drawings, in which:

Figs. 1 and 2 are block diagrams showing a circuit arrangement of an apparatus for detecting water leakage according to a first embodiment of the present invention;

Figs. 3A to 3G are timing charts for explaining operations of apparatuses for detecting water leakages according to the first embodiment and a second embodiment of the present invention;

Fig. 3H is a timing chart for explaining an operation of the apparatus for detecting water leakage according to the second embodiment of the present invention;

Figs. 4 and 5 are flow charts for explaining operations of the apparatus for detecting water leakage according to the first embodiment;

Fig. 6 is a graph showing a relationship between the distance to a water leakage position and a first peak frequency of a signal generated by water leakage; and

Figs. 7 and 8 are block diagrams showing an arrangement of the apparatus for detecting water leakage according to the second embodiment.

An apparatus for detecting water leakage according to an embodiment of the present invention will be described with reference to the accompanying drawings.

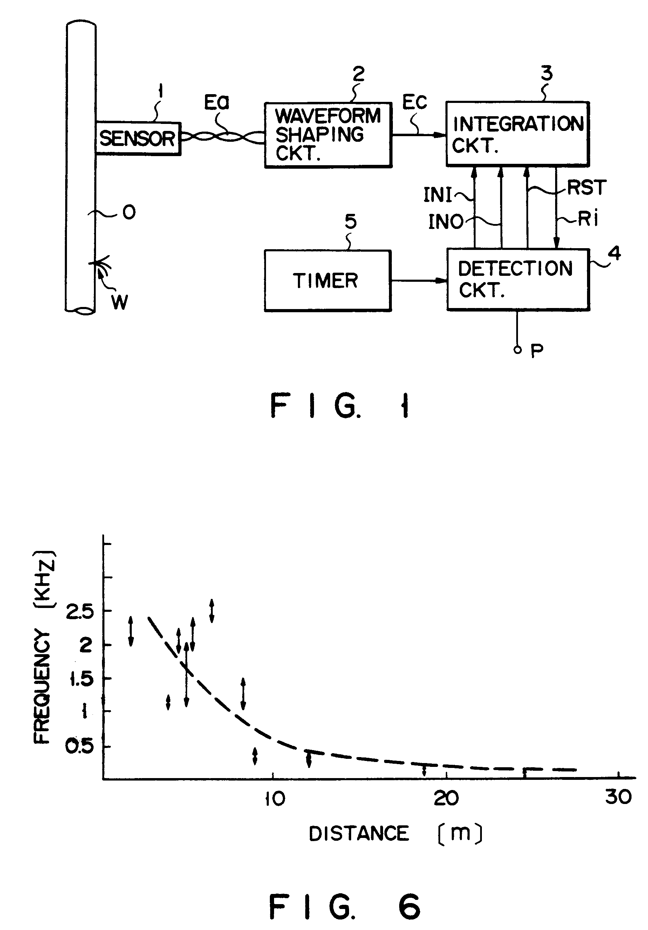

An arrangement of the apparatus for detecting water leakage of this embodiment will be described with reference to Fig. 1.

Referring to Fig. 1, sensor 1 is arranged on, e.g., water pipe 0. Sensor 1 converts a displacement, a speed, or an acceleration of a wall surface of water pipe 0 into an electrical signal. An output signal from sensor 1 is supplied to waveform shaping circuit 2. Waveform shaping circuit 2 amplifies an absolute value of output signal Ea from sensor 1 and compares a signal having an amplified absolute value with a predetermined reference voltage (i.e., a threshold level). A portion of the signal from the waveform shaping circuit 2, which exceeds the reference voltage, is converted into a signal of logic "1" having a predetermined voltage. However, a signal portion having a level lower than the predetermined voltage is converted into a signal of level "0".

Output signal Ec from waveform shaping circuit 2 is supplied to integration circuit 3. Integration circuit 3 integrates a period of time when it is kept at logic level and outputs the resultant time integration value R.

Detection circuit 4 is connected to integration circuit 3. Detection circuit 4 receives time integration value R and detects the presence/absence of water leakage on the basis of time integration value R. In addition, detection circuit 4 outputs integration start signal INI, integration end signal INO, and reset signal RST to control integration circuit 3.

Timer 5 is connected to detection circuit 4. Timer 5 obtains integration start time and integration end time of the integration circuit 3 and outputs an interrupt signal to detection circuit 4 at predetermined intervals.

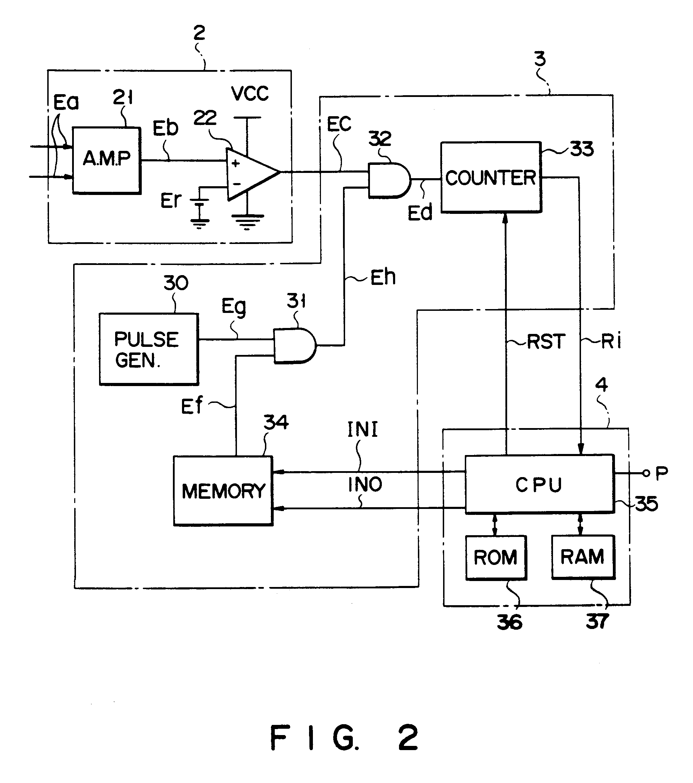

Detailed arrangements of waveform shaping circuit 2, integration circuit 3 and detection circuit 4 shown in Fig. 1 will be described with reference to Fig. 2.

Output signal Ea from sensor 1 is supplied to absolute value amplifier 21. Output signal Eb from absolute value amplifier 21 is supplied to the noninverting input terminal of comparator 22. The inverting input terminal of comparator 22 receives reference voltage Er. When a voltage of signal Eb exceeds reference voltage Er, comparator 22 outputs a signal having a voltage substantially equal to power source voltage Vcc. However, when the voltage of signal Eb is lower than reference voltage Er, comparator 22 outputs a ground voltage.

Integration start signal INI and integration end signal INO output from detection circuit 4 are supplied to memory 34. Memory 34 comprises, e.g., an RS flipflop, the set terminal of which receives signal INI and the reset terminal of which receives signal INO. Memory 34 maintains a logic "1" state between an input of integration start signal INI and an input of integration end signal INO. Output signal Ef from memory 34 is supplied to one input terminal of AND gate 31. The other input terminal of AND gate 31 is connected to pulse generator 30. Pulse generator 30 generates pulse signal Eg having a predetermined period. AND gate 31 calculates an AND signal of output signal Ef from memory 34 and output signal Eg from pulse generator 30 and outputs the AND signal as signal Eh. That is, AND gate 31 outputs pulse signal Eh having a predetermined period between an output timing of integration start signal INI and an output timing of integration end signal INO.

Signal Eh from AND gate 31 is supplied to one input terminal of AND gate 32. Output signal Ec from waveform shaping circuit 2 is supplied to the other input terminal of AND gate 32. AND gate 32 calculates an AND signal of signals Eh and EC. That is, AND gate 32 outputs pulse signal Ed having a predetermined period between an output timing of integration start signal INI and an output timing of integration end signal NO while signal Ec is kept at logic "1".

Counter 33 receives output signal Ed from AND gate 32 and counts pulses included in signal Ed. The number of counted pulses indicates the integration value R of "1"-level time periods of signal Ec from the output timing of integration start signal INI to the output timing of integration end signal INO. Counter 33 is reset in response to reset signal RST.

Detection circuit 4 comprises a microcomputer including central processing unit (CPU) 35, ROM 36 for storing operation programs of CPU 35, permanent data and the like, and RAM 37 for storing data and the like.

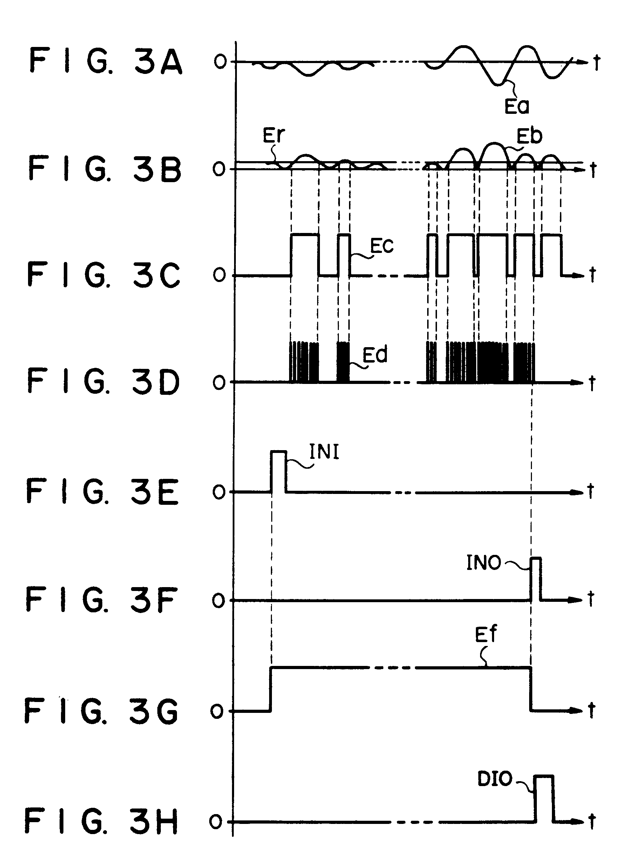

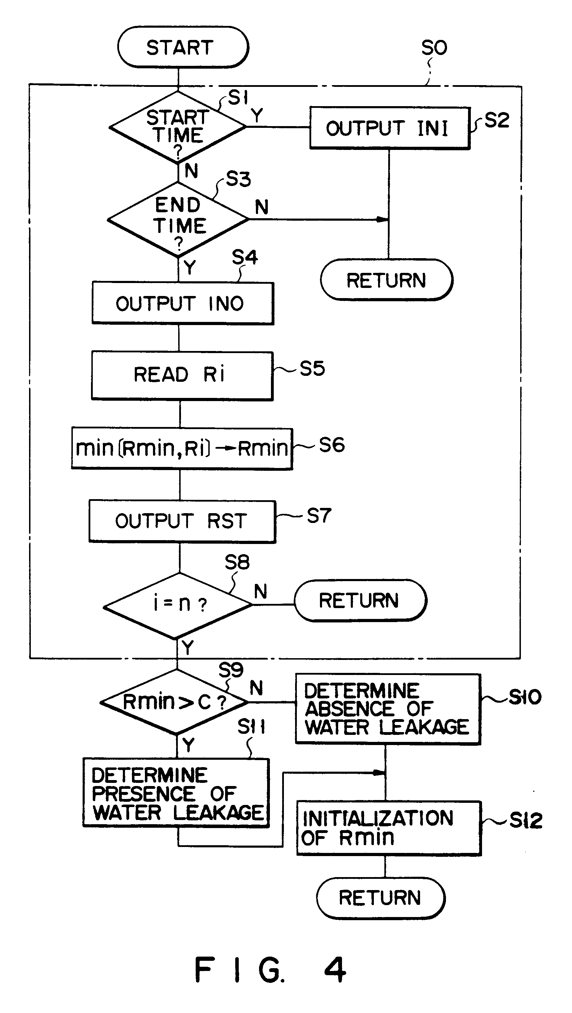

The operation of the water leakage detecting apparatus shown in Figs. 1 and 2 will be described with reference to the timing charts shown in Figs. 3A to 3G and the flow chart shown in Fig. 4.

When the power switch (not shown) of the water leakage detecting apparatus is turned on, sensor 1 detects a vibration of a pipe wall of water pipe 0, and outputs signal Ea as shown in Fig. 3A. Absolute value amplifier 21 absolute-value amplifies signal Ea, and outputs signal Eb as shown in Fig. 3B. Comparator 22 compares signal Eb with preset reference voltage Er. Comparator 22 converts a signal portion where the voltage of signal Eb is higher than reference voltage Er into a signal of a constant high voltage, converts a signal portion where the voltage of signal Eb is lower than reference voltage Er into a signal of 0 V, and then, outputs the obtained signal to integration circuit 3. Pulse generator 30 continuously outputs pulse signal Eg having a predetermined period.

In the above assumption, when an interruption signal periodically output from timer 5 is received, detection circuit 4 performs water leakage detection processes as shown in the flow chart of Fig. 4.

First, it is checked if one of a plurality of integration start times preset in ROM 36 (e.g., AM 0:00, 1:00, 2:00, 3:00) coincides with a time output from timer 5 (step S1).

If a noncoincidence is detected in step S1, it is checked if one of a plurality of preset integration end times (e.g., AM 0:40, 1:40, 2:40, 3:40) coincides with an output time from timer 5 (step S3). If a noncoincidence is detected in step S3, control returns to an interruption standby program.

After a time has passed, if the present time coincides with one of the integration start times, a coincidence is detected in step S1, and detection circuit 4 outputs integration start signal INI as shown in Fig. 3E (step S2). Upon reception of integration start signal INI, memory 34 is set, and outputs signal Ef at logic level "1", as shown in Fig. 3G. In response to signal Ef of logic level "1", AND gate 31 outputs pulse signal Eg from pulse generator 30 as signal Eh. AND gate 32 receives signal Ec and pulse signal Eh. When signal Ec is at "1" level, AND gate 32 outputs pulse signal Ed as shown in Fig. 3D. Counter 33 counts the number of pulses included in signal Ed output from AND gate 32.

During execution of the above operation, timer 5 periodically outputs an interruption signal, and steps S1 and S3 are repeated. If a predetermined period of time has passed from the output timing of integration start signal INI, it is determined in step S3 that the present time coincides with one of the interruption end times. Detection circuit 4 outputs integration end signal INO to integration circuit 3, as shown in Fig. 3F (step S4).

Upon reception of integration end signal INO, memory 34 is reset, as shown in Fig. 3G, and both signals Ef and Eh go to logic level "0". Signal Ed also goes to logic level "0", as shown in Fig. 3D. Therefore, counter 33 stops a count-up operation. The count value of counter 33 in this state indicates the integration value (total sum) R of "1"-level time periods of output signal Ec from waveform shaping circuit 2 during an interval from the output timing of integration start signal INI to the output timing of integration end signal INO.

Detection circuit 4 reads out time integration value Ri indicated by the count value of counter 33 in step S5. In this case, suffix i means ith measurement. Detection circuit 5 compares currently obtained time integration value Ri with minimum value Rmin of the stored time integration values, and stores the smaller one as the new minimum value Rmin (step S6). Detection circuit 4 outputs reset signal RST to reset counter 33, thus preparing for the next measurement. Detection circuit 4 then checks if measurement count i has reached predetermined count n (e.g., 4) (step S8). If NO in step S8, control returns to the interruption standby program.

If measurement count i is equal to preset count n, control advances to step S9.

In step S6, detection circuit 4 compares preset threshold value C with finally obtained minimum value Rmin. If minimum value Rmin is larger than threshold value C, detection circuit 4 determines the presence of water leakage, and outputs water leakage detection signal to terminal P (step S11). In contrast to this, if measurement value Rmin is smaller than threshold value C, detection circuit 4 outputs to terminal P a signal indicating the absence of water leakage (step S10).

Thereafter, in step S12, in order to initialize minimum value Rmin, a sufficiently large value is set as minimum value Rmin, and control then returns to the interruption standby program.

In this embodiment, the measurement is performed a plurality of times and time integration value Ri is obtained during each measurement period. Minimum value Rmin of the obtained time integration values Ri is compared with threshold value C to determine the presence/absence of water leakage. A noise component always has an interrupted period even if it is due to the unrelated noise of a construction site or water tank pump. Therefore, in this embodiment, minimum value Rmin is regarded as a measurement value when the noise component is minimum, and the presence/absence of water leakage is determined using this minimum value Rmin. Thus, the influence of noise can be removed or eliminated. Therefore, erroneous detection of a water leakage due to unrelated noise can be prevented.

In the above embodiment, 40-minute measurements are performed four times during a time interval from AM 0:00 to AM 4:00, during which interval noise is considered to be relatively small. However, the present invention is not limited to the case wherein measurement is performed a plurality of times during a specific time interval. For example, integration start times, integration end times, integration measurement count, and the like can be arbitrarily set. For example, 1-hour measurement may be performed 24 times during a time interval from 0:00 to 24:00. For example, if a measurement period, a measurement interval, and a measurement count are set so that measurement is performed n times for two days, the presence/absence of water leakage is repetitively detected at every 2-day interval.

The present invention is not limited to above embodiment. For example, after every n time measurement is completed, water leakage may be determined using minimum value Rmin of the measurement values of the least m x n measurement.

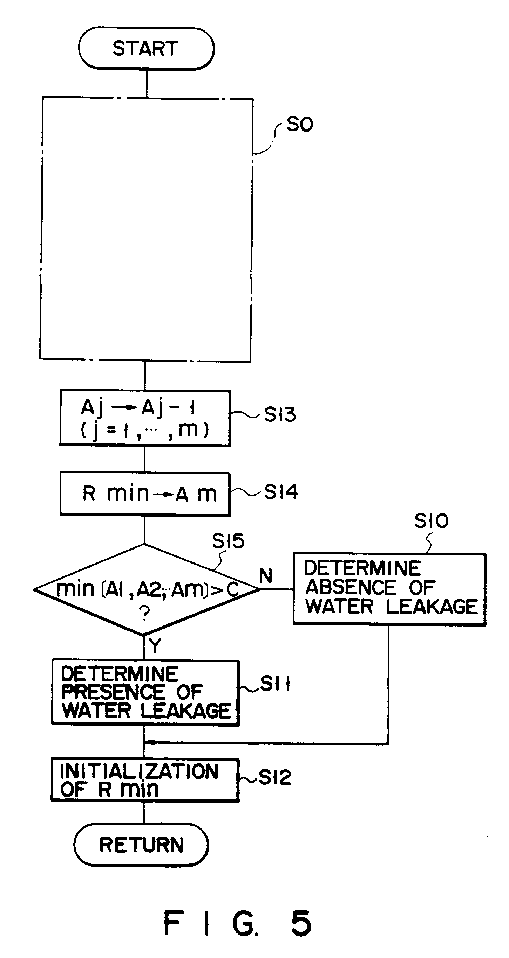

Fig. 5 shows an operation of a water leakage detecting apparatus which performs measurement n times a day, and everyday, the presence/absence of water leakage is detected using minimum value Rmin of the measurement value of the past m days including the day of measurement. In the flow chart shown in Fig. 5, a portion surrounded by dotted line S0 is substantially the same as a portion surrounded by dotted line S0 in Fig. 4, and a detailed description thereof will be omitted. After n measurements of a certain day are ended by steps in the portion surrounded by dotted line S0 in Fig. 5, control advances to step S13. In step S13, minimum value A(J-1) (j = 1, 2,..., m) of time integration values of a (j-1)th day is replaced with minimum value Aj of a jth day. Then, minimum value Rmin of the latest n time integration values Ri (of the day in this embodiment) is given as minimum value Am of an mth day (step $S_{14}$). Thus, minimum values Aj of time integra-tion values for recent m days can always be retained. Thereafter, the smallest value of minimum values Aj of time integration values for the latest m days is compared with threshold value C, thus detecting the presence/absence of water leakage (step S15). Note that steps S10, S11, and S12 are the same as those in Fig. 3.

If the apparatus is operated as shown in Fig. 5, even if a great amount of unrelated noise is generated throughout a specific day, erroneous detection of water leakage can be prevented.

The water leakage detecting apparatus according to the first embodiment can detect the presence/absence of water leakage but cannot detect the distance from a sensor mounting position to a water leakage position. A water leakage detecting apparatus according to a second embodiment of the present invention can also detect this distance to a water leakage position.

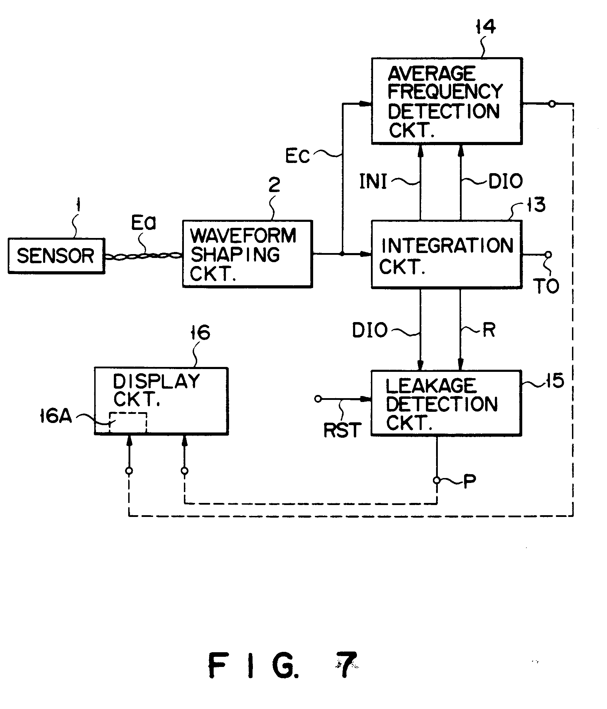

A technique for obtaining a distance to a water leakage position according to the present invention is based on the test result in that "a high-frequency component of a vibration transmitting through a water pipe is attenuated as a transmission length is increased, and the main component of the frequency of a vibration generated due to water leakage has a predetermined relationship with the distance to the water leakage position". Fig. 6 shows an example of the test result. Fig. 6 shows measurement results of 11 samples of water leakage detected in an urban district by practicing this method. In Fig. 6, the maximum level frequency resulting from spectrum-analysis of a frequency of a vibration, is plotted along the ordinate, and the distance from a sensor mounting position to a water leakage position is plotted along the abscissa.

An arrangement of an embodiment of a water leakage detecting apparatus which can detect a distance to a water leakage position based on the above principle will be described with reference to Fig. 7.

In Fig. 7, the arrangements of sensor 1 and waveform shaping circuit 2 are substantially the same as those shown in Fig. 1. Output signal Ec from waveform shaping circuit 2 is supplied to integration circuit 13. Integration circuit 13 calculates an integration value of "1"-level time periods of signal Ec during a time interval from a predetermined integration start time to an integration end time.

Output signal Ec from waveform shaping circuit is also supplied to average frequency detection circuit 14. Detection circuit 14 calculates an average frequency of output signal Ea from sensor 1 during a time interval from the predetermined integration start time to the integration end time.

Detection circuit 15 is connected to integration circuit 13, and compares time integration value R calculated by integration circuit 13 with preset threshold value C so as to determine the presence/absence of water leakage.

Display 16 is connected to detection circuits 14 and 15. Display 16 displays the presence/absence of water leakage determined by detection circuit 15, and the average frequency calculated by detection circuit 14.

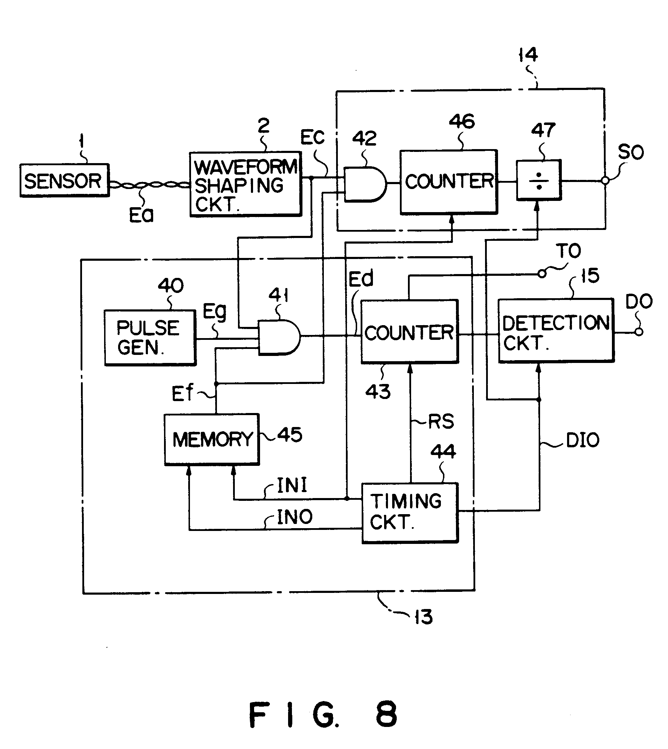

A detailed arrangement of integration circuit 14 an average frequency detection circuit 14 shown in Fig. 7 will be described hereinafter with reference to Fig. 8.

Integration circuit 13 includes timing circuit 44 which outputs integration start signal INI at a predetermined integration start time, and outputs integration end signal INO at a predetermined integration end time. Memory 45 is set in response to integration start signal INI, and is reset in response to integration end signal INO. Output signal Ef from memory 45 is supplied to one input terminal of AND gate 42. Output signal Ec from waveform shaping circuit 2 is input to the other input terminal of AND gate 42. The output signal from AND gate 42 is supplied to counter 46 which counts the number of pulses included in the input signal. The count value of counter 46 is supplied to division circuit 47. The output signal from division circuit 47 is supplied to display 16 as an output signal from average frequency detection circuit 14.

Output signal Ec from waveform shaping circuit 2, output signal Ec from pulse generator 40, and output signal Ef from memory 45 are supplied to AND gate 41. Output signal Ed from AND gate 41 is supplied to counter 43. Counter 43 counts the number of pulses included in output signal Ed from AND gate 41. The count value is output to terminal T0, and is also supplied to detection circuit 15. Rest signal RS output from timing circuit 44 is supplied to the reset terminal of counter 43. Detection instruction signal output from timing circuit 44 is supplied to detection circuit 14 and division circuit 47. Integration start signal INI is supplied to the reset terminal of counter 46.

The operation of the circuit shown in Figs. 7 and 8 will be described below.

When a power switch is turned on, sensor 1 detects a vibration of a wall of a water pipe, and outputs signal Ea, as shown in Fig. 3A. Waveform shaping circuit 2 absolute-value amplifies output signal Ea from sensor 1, and outputs signal Eb shown in Fig. 3B. Waveform shaping circuit 2 compares signal Eb with reference voltage Er, and converts a signal portion which is higher than reference voltage Er into a signal of a predetermined voltage, and a signal portion which is lower than reference voltage Er into a signal of 0 V. Pulse generator 40 continuously outputs a pulse signal of a predetermined period.

When the present time has reached a predetermined integration start time, timing circuit 44 outputs integration start signal INI to memory 45, as shown in Fig. 3E. In response to integration start signal INI, memory 45 is set, and outputs signal Ef of logic level "1", as shown in fig. 3G. In response to signal Ef of logic level "1", AND gate 42 directly outputs signal Ec from waveform shaping circuit 2, as shown in Fig. 3C. Counter 46 counts the number of pulses included in the output signal from AND gate 42.

In response to signal Eg of logic level "1", AND gate 41 ANDs signal Ec and pulse signal Eg, and outputs pulse signal Ed shown in Fig. 3D. Counter 43 counts the number of pulses included in output signal Ed from AND gate 41.

When the present time has reached an integration end time, timing circuit 44 outputs integration end signal INO to memory 45, as shown in Fig. 3F. In response to integration end signal INO, memory 45 is reset, and output signal Ef of logic level "0". Thus, AND gates 41 and 42 stop outputting of pulse signals, and counters 43 and 46 stop the count-up operation. In this state, the count value held in counter 43 indicates integration value R of "1"-level time periods of output signal Ec from waveform shaping circuit 2 during at time interval between an output timing of integration start signal INI to an output timing of integration end signal INO. The count value held by counter 46 indicates the number of pulses included in output signal Ec during a time interval between the output timing of integration start signal INI to the output timing of integration end signal INO.

After signal INO is output, timing circuit 44 outputs detection execution signal DIO shown in Fig. 3H.

Upon reception of detection execution signal DIO, division circuit 47 divides the count value of counter 46 with second count S x 2 from the output timing of signal INI to the output timing of signal INO. Thus, the average frequency of output signal Ea from sensor 1 from the output timing of signal INI to the output timing of signal INO can be calculated.

Upon reception of detection execution signal DIO, detection circuit 15 compares time integration value R indicated by the count value of counter 43 with preset threshold value C. If time integration value R is larger than threshold value C, detection circuit 15 determines the presence of water leakage, and outputs a signal indicating the presence of water leakage to terminal P. Oppositely, if time integration value R is smaller than threshold value C, detection circuit 15 determines the absence of water leakage, and outputs a signal indicating the absence of water leakage to terminal P.

Display 16 displays the presence/absence of water leakage in response to the output signal from detection circuit 15. When water leakage is detected, display 15 displays the average frequency based on the output signal from division circuit 47.

After detection execution signal DIO is output, reset signal RST is output, and counter 43 is cleared. On the other hand, counter 46 is cleared in response to integration start signal INI. Detection circuit 15 starts its operation in response to detection execution signal DIO. Thus, detection of the presence/absence of water leakage and the average frequency can be held at least until the next measurement is started.

With the above arrangement, an operator can only check display 16 to learn of the presence/absence of water leakage. In addition, the distance to a water leakage position can be calculated based on the graph shown in Fig. 6.

Note that the relationship between the distance and frequency shown in Fig. 6 changes in accordance with the material and type of pipe through which a vibration is transmitted. If the material of the pipe is changed, a curve representing the relationship between frequency and distance has a standard well-defined form, and the distance can be accurately calculated by detecting the material of pipe.

With the above arrangement, the presence/absence of water leakage and distance to a water leakage position can be calculated by a single measuring apparatus.

In the second embodiment described above, the time integration value and the average frequency are measured a plurality of times, and minimum value Rmin of time integration values R is compared with threshold value C, so that the presence/absence of a water leakage can be determined free from the influence of unrelated noise or the like. In this case, the water leakage detecting apparatus compares minimum value Rmin of a plurality of time integration values Ri calculated by a plurality of measurements with threshold value C to detect the presence/absence of water leakage. The distance to a water leakage position is calculated using an average frequency when minimum value Rmin is obtained. With this arrangement, the presence/absence of water leakage and the distance to the water leakage position can be measured without influence from unrelated noise.

In this embodiment, the average frequency is displayed on display 16. However, arithmetic circuit 16A, for example, can be arranged in display 16 so that arithmetic circuit 16A calculates a distance from the calculated average frequency in accordance with Fig. 6, and display 16 displays the calculated distance.

The water leakage detecting apparatus of this embodiment has a relatively simple, low-cost arrangement. For this reason, the water leakage detecting apparatus can be attached to a water meter installed in each home.

In the above embodiment, threshold value C and reference voltage Er must not be a value so low as to detect water leakage if no water leakage is occurring, and must also not be a value so high as not to detect water leakage if water leakage is, in fact, occurring.

In the above embodiment, sensor 1 is attached to water pipe 0. However, the present invention is not limited to this. For example, the sensor may be attached to any place such as a fire plug, water meter, a water control valve, and the like where a vibration or noise generated by water leakage is transmitted.

In the above embodiment, the output signal from sensor 1 is absolute-value amplified, and time intervals for which the amplified signal exceeds predetermined reference voltage Er are integrated. However, the present invention is not limited to this. For example, an envelope of output signal Eb from absolute value amplifier 21 is calculated, and time intervals for which the envelope exceeds the threshold value may be integrated. For example, an average level per unit time of absolute-value amplified signal Eb is calculated, and time intervals for which the average level exceeds the threshold value may be integrated. Similarly, an effective value per unit time of AC output signal Ea from sensor 1 is calculated, and time interval for which the effective value exceeds the threshold value may be integrated.

In the above embodiment, the period of the pulse signal generated by pulse generator 30 or 40 is preferably 4 times or more the frequency of signal Ec. This is to accurately calculate a "1"-level period of signal EC. Therefore, when waveform shaping circuit 2 includes a low-pass filter, the pulse signal preferably has a frequency about 4 times the cutoff frequency of the filter.

In the above embodiment, the average frequency is regarded to be substantially equal to a first peak frequency, so that a distance to a water leakage position can be calculated by a simple arrangement. However, the present invention is not limited to this. For example, the first peak frequency of the detected vibration can be accurately obtained using a frequency analyzer, and the distance to a water leakage position can be calculated based on this first peak frequency.

**Claims**

1. A water leakage detecting apparatus including:
   vibration detection means (1) for detecting a vibration of a water channel or an object acoustically connected thereto; and
   water leakage detection means (13, 15), connected to said vibration detection means (1), for detecting a presence/absence of water leakage in response to an output signal from said vibration detection means (1),
   characterized in that
   said water leakage detecting apparatus further comprises frequency detecting means (14), connected to said vibration detection means (1), for receiving the output of said vibration detection means (1), and detecting a peak frequency of the vibration detected by said vibration detection means (1) within a predetermined period of time so as to measure a distance from a mounting position of said vibration detection means (1) to a water leakage position in accordance with a relationship representing that the distance is substantially in inverse proportion to the peak frequency.

2. An apparatus according to claim 1, characterized in that said water leakage detection means comprises:
   integration means (13), connected to said vibration detection means (1), for integrating a time interval for which a vibration level of the vibration detected by said vibration detection means (1) exceeds a predetermined value within the predetermined period of time; and
   determination means (15) for comparing an integration value (R) obtained by said integration means (13) with the preset reference value (C) and for, when the integration value (R) exceeds the reference value (C), determining a presence of water leakage and when the integration value (R) is smaller than the reference value (C), determining an absence of water leakage, wherein said frequency detecting means (14) detects a first peak frequency of an output signal (Ea) from said vibration detection means (1) within the predetermined period of time.

3. An apparatus according to claim 1 or 2, characterized in that
   said integration means (13) performs the integration a plurality of times,
   said water leakage determination means (15) compares with a preset reference value (C) a minimum value of a plurality of integration values obtained by the plurality of times of integration, and determines a presence of water leakage when the minimum value (R) exceeds the reference value (C), and
   said frequency detecting means (14) detects the first peak frequency during the predetermined time interval in which the minimum value is measured.

4. An apparatus according to anyone of claims 1 to 3, characterized in that said frequency detecting means (14) comprises means for defining an average frequency of an output signal (Ea) from said vibration detection means (1) as the first peak frequency and obtaining the average frequency.

5. An apparatus according to anyone of claims 1 to 4, characterized in that
   said integration means comprises
   amplifying means (21) for amplifying an absolute value of an output signal (Ea) from said vibration detection means (1),
   pulse signal generating means (40) for outputting a pulse signal (Eg) having a predetermined period,
   comparing means (22) for comparing a signal level of an output signal (Eb) from said amplifying means (21) with a predetermined reference level and outputting a signal representing a comparison result,
   first gate circuit means (41, 42), connected to said comparing means (21), for gating the pulse signal (Eg) in response to the signal representing the comparison result while the signal level exceeds the predetermined reference level within the predetermined period of time, and

first counting means (43) for counting the number of pulses included in an output signal from said first gate circuit means (41, 42); and said frequency detecting means comprises

second gate circuit means (41, 42), connected to said comparing means (21), for gating the signal (Ec) representing the comparison result within the predetermined period of time,

second counting means (46), connected to said second gate circuit means (41, 42), for counting the number of pulses included in an output signal from said second gate circuit means (41, 42), and

means (47) for dividing a count of said second counting means (46) by a value twice the predetermined period of time and for obtaining the average frequency, the obtained average frequency being regarded as the first peak frequency.

6. An apparatus according to claims 1 to 3, characterized in that said determination means (15) selects a minimum value (Rmin) of n integration values (Ri) obtained by the n-time integration whenever said integration means (13) performs the integration n times, compares the minimum value (Rmin) with the preset reference value (C), and determines the presence of water leakage when the minimum value (Rmin) exceeds the preset reference value (C) and the absence of water leakage when the minimum value (Rmin) is smaller than the preset reference value (C).

7. An apparatus according to claim 6, characterized in that said n-time integration includes a current integration cycle whenever the integration of said integration means (13) is completed.

8. An apparatus according to anyone of claims 1 to 4, characterized in that said integration means comprises:

amplifying means (21) for amplifying an absolute value of an output signal (Ea) of said vibration detection means (1);

comparing means (22), connected to said amplifying means (21), for comparing a signal level of an output signal (Eb) from said amplifying means (21) with a predetermined reference level, and outputting a signal (Ec) representing a comparison result;

integrator means (30 - 33) connected to the output signal (Ea) from said comparing means (22) and responsive to the output signal (Ea) from said comparing means (22) to integrate a time interval for which the output signal (Eb) from said amplifying means (21) exceeds the reference levels;

timer means (5) for measuring a time lapse;

means (37), connected to said timer means (5), for storing a plurality of integration start timings and a plurality of integration end timings; and

control means (35), connected to said timer means (5) and said timing storing means (37), for starting said integrator means (30 - 33) when an output signal from said timer means (5) represents one of the integration start timings, interrupting an operation of said integrator means (30 - 33) when the output from said timer means (5) represents one of the integration end timings, and storing an integration result obtained by said integrator means (30 - 33).

9. An apparatus according to anyone of claims 1 to 4, characterized in that said integration means comprises:

amplifying means (21) for amplifying an absolute value of an output signal (Ea) from said vibration detection means (1),

pulse generating means (30) for outputting a pulse signal (Eg) having a predetermined period;

gate means (31, 32), connected to said amplifying means (21) and said pulse generating means (30), for comparing a signal level of an output signal (Eb) from said amplifying means (21) with a predetermined reference value level, and gating the pulse signal (Eg) when the signal level of the output signal (Eb) from said amplifying means (21) exceeds the reference level; and

counting means (33) for counting the number of pulses included in an output signal (Ed) from said gate means (31, 32) within the predetermined period of time.

10. A water leakage detecting apparatus including:

vibration detection means (1) for detecting a vibration generated due to water leakage;

integration means (2, 3), connected to said detection means (1), for integrating a time interval for which a vibration level of the vibration detected by said detection means (1) exceeds a predetermined value within a predetermined period of time; and

determination means (4) for comparing an integration value with a preset reference value and for, when the integration value exceeds the preset reference value, determining a presence of water leakage and when the integration value is smaller than the preset reference value, determining an absence of water leakage;

characterized in that

said integration means (2, 3) performs the integration a plurality of times to obtain a plurality of integration values; and

said determination means (4) receives the plurality of integration values (Ri) calculated by said integration means (2, 3), selects a minimum value (Rmin) of the plurality of integration values (Ri) as an integration value obtained when the influence of noise is minimum, compares the selected minimum value (Rmin) with a preset reference value (C), and determines the presence of water leakage when the minimum value (Rmin) exceeds the reference value (C), and the absence of water leakage when the minimum value (Rmin) is smaller than the reference value (C).

11. An apparatus according to claim 10, characterized in that said determination means (4) selects a minimum value (Rmin) of n integration values (Ri) obtained by the n-time integration whenever said integration means (2, 3) performs the integration n times, compares the minimum value (Rmin) with the preset reference value (C), and determines the presence of water leakage when the minimum value (Rmin) exceeds the preset reference value (C) and the absence of water leakage when the minimum value (Rmin) is smaller than the preset reference value (C).

12. An apparatus according to claim 10, characterized in that said determination means (4) selects a minimum value (Rmin) of m integration values (Ri) obtained by m-time integration including a current integration cycle whenever the integration of said integration means (2, 3) is completed, compares the minimum value (Rmin) with the preset reference value (C), and determines the presence of water leakage when the minimum value (Rmin) exceeds the preset reference value (C) and the absence of water leakage when the minimum value (Rmin) is smaller than the preset reference value (C).

13. An apparatus according to claim 10, characterized in that said integration means comprises:

amplifying means (21) for amplifying an absolute value of an output signal (Ea) of said vibration detection means (1);

comparing means (22), connected to said amplifying means (21), for comparing a signal level of an output signal (Eb) from said amplifying means (21) with a predetermined reference level, and outputting a signal (Ec) representing a comparison result;

integrator means (30 - 33) connected to the output signal (Ea) from said comparing means (22) and responsive to the output signal (Ea) from said comparing means (22) to integrate a time interval for which the output signal (Eb) from said amplifying means (21) exceeds the reference level;

timer means (5) for measuring a time lapse;

means (37), connected to said timer means (5), for storing a plurality of integration start timings and a plurality of integration end timings; and

control means (35), connected to said timer means (5) and said timing storing means (37), for starting said integrator means (30 - 33) when an output signal from said timer means (5) represents one of the integration start timings, interrupting an operation of said integrator means (30 - 33) when the output from said timer means (5) represents one of the integration end timings, and storing an integration result obtained by said integrator means (30 - 33).

14. An apparatus according to claim 10, characterized in that said integration means comprises:

amplifying means (21) for amplifying an absolute value of an output signal (Ea) from said vibration detection means (1);

pulse generating means (30) for outputting a pulse signal (Eg) having a predetermined period;

gate means (31, 32), connected to said amplifying means (21) and said pulse generating means (30), for comparing a signal level of an output signal (Eb) from said amplifying means (21) with a predetermined reference value level, and gating the pulse signal (Eg) when the signal level of the output signal (Eb) from said amplifying means (21) exceeds the reference level; and

counting means (33) for counting the number of pulses included in an output signal (Ed) from said gate means (31, 32) within the predetermined period of time.

## Revendications

1. Dispositif de détection de fuite d'eau comportant :

un moyen de détection de vibration (1) pour détecter une vibration d'une voie d'eau ou d'un objet qui lui est relié de manière acoustique ; et

un moyen de détection de fuite d'eau (13, 15), connecté audit moyen de détection de vibration (1), pour détecter une présence/absence de fuite d'eau en réponse à un signal de sortie qui provient dudit moyen de détection de vibration (1),

caractérisé en ce que :

ledit dispositif de détection de fuite d'eau comprend en outre un moyen de détection de fréquence (14), connecté audit moyen de détection de vibration (1), pour recevoir la sortie dudit moyen de détection de vibration (1) et pour détecter une fréquence de pic de la vibration détectée au moyen dudit moyen de détection de vibration (1) pendant une période temporelle prédéterminée de manière à mesurer une distance qui sépare une position de montage dudit moyen de détection de vibration (1) d'une position de fuite d'eau en fonction d'une relation qui représente le fait que la distance est sensiblement inversement proportionnelle à la fréquence de pic.

2. Dispositif selon la revendication 1, caractérisé en ce que ledit moyen de détection de fuite d'eau comprend :

un moyen d'intégration (13), connecté audit moyen de détection de vibration (1), pour intégrer un intervalle temporel pour lequel un niveau de vibration de la vibration détectée par ledit moyen de détection de vibration (1) excède une valeur prédéterminée pendant la période temporelle prédéterminée ; et

un moyen de détermination (15) pour comparer une valeur d'intégration (R) obtenue au moyen dudit moyen d'intégration (13) à la valeur de référence pré-établie (C) et pour, lorsque la valeur d'intégration (R) excède la valeur de référence (C), déterminer une présence de fuite d'eau, et lorsque la valeur d'intégration (R) est inférieure à la valeur de référence (C), déterminer une absence de fuite d'eau, dans lequel ledit moyen de détection de fréquence (14) détecte une première fréquence de pic d'un signal de sortie (Ea) qui provient dudit moyen de détection de vibration (1) pendant la période temporelle prédéterminée.

3. Dispositif selon la revendication 1 ou 2, caractérisé en ce que :

ledit moyen d'intégration (13) effectue l'intégration une pluralité de fois ;

ledit moyen de détermination de fuite d'eau (15) compare à une valeur de référence pré-établie (C) une valeur minimale d'une pluralité de valeurs d'intégration obtenues au moyen de l'intégration réalisée une pluralité de fois et détermine une présence de fuite d'eau lorsque la valeur minimale (R) excède la valeur de référence (C) ; et

ledit moyen de détection de fréquence (14) détecte la première fréquence de pic pendant l'intervalle temporel prédéterminé au cours duquel la valeur minimale est mesurée.

4. Dispositif selon l'une quelconque des revendications 1 à 3, caractérisé en ce que ledit moyen de détection de fréquence (14) comprend un moyen pour définir une fréquence moyenne d'un signal de sortie (Ea) qui provient dudit moyen de détection de vibration (1) en tant que la première fréquence de pic et pour obtenir la fréquence moyenne.

5. Dispositif selon l'une quelconque des revendications 1 à 4, caractérisé en ce que :

ledit moyen d'intégration comprend :

un moyen d'amplification (21) pour amplifier une valeur absolue d'un signal de sortie (Ea) qui provient dudit moyen de détection de vibration (1) ;

un moyen de génération de signal d'impulsions (40) pour émettre en sortie un signal d'impulsions (Eg) présentant une période prédéterminée ;

un moyen de comparaison (22) pour comparer un niveau de signal d'un signal de sortie (Eb) qui provient dudit moyen d'amplification (21) à un niveau de référence prédéterminé et pour émettre en sortie un signal qui représente un résultat de comparaison ;

un premier moyen de circuit de porte (41, 42), connecté audit moyen de comparaison (21), pour soumettre à la logique de porte le signal d'impulsions (Eg) en réponse au signal qui représente le résultat de comparaison tandis que le niveau de signal excède le niveau de référence prédéterminé pendant la période temporelle prédéterminée ; et

un premier moyen de comptage (43) pour compter le nombre d'impulsions incluses dans un signal de sortie qui provient dudit premier moyen de circuit de porte (41, 42) ;

et en ce que ledit moyen de détection de fréquence comprend :

un second moyen de circuit de porte (41, 42), connecté audit moyen de comparaison (21), pour soumettre à la logique de porte le signal (Ec) qui représente le résultat de comparaison pendant la période temporelle prédéterminée ;

un second moyen de comptage (46), connecté audit second moyen de circuit de porte (41, 42), pour compter le nombre d'impulsions incluses dans un signal de sortie qui provient dudit second moyen de sortie de porte (41, 42) ; et

un moyen (47) pour diviser une valeur de comptage dudit second moyen de comptage (46) par une valeur qui vaut 2 fois la période temporelle prédéterminée et pour obtenir la fréquence moyenne, la fréquence moyenne obtenue étant considérée comme étant la première fréquence de pic.

6. Dispositif selon les revendications 1 à 3, caractérisé en ce que ledit moyen de détermination (15) sélectionne une valeur minimale (Rmin) parmi n valeurs d'intégration (Ri) obtenues au moyen de l'intégration effectuée n fois chaque fois que ledit moyen d'intégration (13) effectue l'intégration n fois, compare la valeur minimale (Rmin) à la valeur de référence pré-établie (C) et détermine la présence d'une fuite d'eau lorsque la valeur minimale (Rmin) excède la valeur de référence pré-établie (C) et l'absence de fuite d'eau lorsque la valeur minimale (Rmin) est inférieure à la valeur de référence pré-établie (C).

7. Dispositif selon la revendication 6, caractérisé en ce que ladite intégration effectuée n fois inclut un cycle d'intégration courant chaque fois que l'intégration dudit moyen d'intégration (13) est terminée.

8. Dispositif selon l'Une quelconque des revendications 1 à 4, caractérisé en ce que ledit moyen d'intégration comprend :

un moyen d'amplification (21) pour amplifier une valeur absolue d'un signal de sortie (Ea) dudit moyen de détection de vibration (1) ;

un moyen de comparaison (22), connecté audit moyen d'amplification (21), pour comparer un niveau de signal d'un signal de sortie (Eb) qui provient dudit moyen d'amplification (21) à un niveau de référence prédéterminé et pour émettre en sortie un signal (Ec) qui représente un résultat de comparaison ;

un moyen intégrateur (30-33) connecté au signal de sortie (Ea) qui provient dudit moyen de comparaison (22), ce moyen d'intégration étant sensible au signal de sortie (Ea) qui provient dudit moyen de comparaison (22) afin d'intégrer un intervalle temporel pour lequel le signal de sortie (Eb) qui provient dudit moyen d'amplification (21) excède les niveaux de référence ;

un moyen de minuterie (5) pour mesurer un temps passé ;

un moyen (37), connecté audit moyen de minuterie (5), pour stocker une pluralité d'instants de début d'intégration et une pluralité d'instants de fin d'intégration ; et

un moyen de commande (35), connecté audit moyen de minuterie (5) et audit moyen de stockage d'instants (37), pour démarrer ledit moyen intégrateur (30-33) lorsqu'un signal de sortie qui provient dudit moyen de minuterie (5) représente l'un des instants de début d'intégration, pour interrompre un fonctionnement dudit moyen intégrateur (30-33) lorsque la sortie qui provient dudit moyen de minuterie (5) représente l'un des instants de fin d'intégration et pour stocker un résultat d'intégration obtenu par ledit moyen intégrateur (30-33).

9. Dispositif selon l'une quelconque des revendications 1 à 4, caractérisé en ce que ledit moyen d'intégration comprend :

un moyen d'amplification (21) pour amplifier une valeur absolue d'un signal de sortie (Ea) qui provient dudit moyen de détection de vibration (1) ;

un moyen de génération d'impulsions (30) pour émettre en sortie un signal d'impulsions (Eg) présentant une période prédéterminée ;

un moyen de porte (31, 32), connecté audit moyen d'amplification (21) et audit moyen de génération d'impulsions (30), pour comparer un niveau de signal d'un signal de sortie (Eb) qui provient dudit moyen d'amplification (21) à un niveau de valeur de référence prédéterminé et pour soumettre à une logique de porte le signal d'impulsions (Eg) lorsque le niveau de signal du signal de sortie (Eb) qui provient dudit moyen d'amplification (21) excède le niveau de référence ; et

un moyen de comptage (33) pour compter le nombre d'impulsions incluses dans un signal de sortie (Ed) qui provient dudit moyen de porte (31, 32) pendant la période temporelle prédéterminée.

10. Dispositif de détection de fuite d'eau comportant :

un moyen de détection de vibration (1) pour détecter une vibration générée du fait d'une fuite d'eau ;

un moyen d'intégration (2, 3), connecté audit moyen de détection (1), pour intégrer un intervalle temporel pour lequel un niveau de vibration de la vibration détectée par ledit moyen de détection (1) excède une valeur prédéterminée pendant une période temporelle prédéterminée ; et

un moyen de détermination (4) pour comparer une valeur d'intégration à une valeur de référence pré-établie et pour, lorsque la valeur d'intégration excède la valeur de référence pré-établie, déterminer une présence de fuite d'eau et pour, lorsque la valeur d'intégration est inférieure à la valeur de référence pré-établie, déterminer une absence de fuite d'eau ;

caractérisé en ce que :

ledit moyen d'intégration (2, 3) effectue l'intégration une pluralité de fois afin d'obtenir une pluralité de valeurs d'intégration ; et

ledit moyen de détermination (4) reçoit la pluralité de valeurs d'intégration (Ri) calculées au moyen dudit moyen d'intégration (2, 3), sélectionne une valeur minimale (Rmin) parmi la pluralité de valeurs d'intégration (Ri) en tant que valeur d'intégration obtenue lorsque l'influence du bruit est minimale, compare la valeur minimale sélectionnée (Rmin) à une valeur de référence pré-établie (C) et détermine la présence d'une fuite d'eau lorsque la valeur minimale (Rmin) excède la valeur de référence (C) et l'absence de fuite d'eau lorsque la valeur minimale (Rmin) est inférieure à la valeur de référence (C).

11. Dispositif selon la revendication 10, caractérisé en ce que ledit moyen de détermination (4) sélectionne une valeur minimale (Rmin) parmi les n valeurs d'intégration (Ri) obtenues par l'intégration effectuée n fois chaque fois que ledit moyen d'intégration (2, 3) effectue l'intégration n fois, compare la valeur minimale (Rmin) à la valeur de référence pré-établie (C) et détermine la présence d'une fuite d'eau lorsque la valeur minimale (Rmin) excède la valeur de référence pré-établie (C) et l'absence de fuite d'eau lorsque la valeur minimale (Rmin) est inférieure à la valeur de référence pré-établie (C).

12. Dispositif selon la revendication 10, caractérise en ce que ledit moyen de détermination (4) sélectionne une valeur minimale (Rmin) parmi m valeurs d'intégration (Ri) obtenues par une intégration effectuée m fois incluant un cycle d'intégration courant chaque fois que l'intégration dudit moyen d'intégration (2, 3) est terminée, compare la valeur minimale (Rmin) à la valeur de référence pré-établie (C) et détermine la présence d'une fuite d'eau lorsque la valeur minimale (Rmin) excède la valeur de référence pré-établie (C) et l'absence de fuite d'eau lorsque la valeur minimale (Rmin) est inférieure à la valeur de référence pré-établie (C).

13. Dispositif selon la revendication 10, caractérisé en ce que ledit moyen d'intégration comprend :

un moyen d'amplification (21) pour amplifier une valeur absolue d'un signal de sortie (Ea) dudit moyen de détection de vibration (1) ;

un moyen de comparaison (22), connecté audit moyen d'amplification (21), pour comparer un niveau de signal d'un signal de sortie (Eb) qui provient dudit moyen d'amplification (21) à un niveau de référence prédéterminé et pour émettre en sortie un signal (Ec) qui représente un résultat de comparaison ;

un moyen intégrateur (30-33) qui reçoit le signal de sortie (Ea) qui provient dudit moyen de comparaison (22), ce moyen intégrateur étant sensible au signal de sortie (Ea) qui provient dudit moyen de comparaison (22) pour intégrer un intervalle temporel pour lequel le signal de sortie (Eb) qui provient dudit moyen d'amplification (21) excède le niveau de référence ;

un moyen de minuterie (5) pour mesurer un temps passé ;

un moyen (37), connecté audit moyen de minuterie (5), pour stocker une pluralité d'instants de début d'intégration et une pluralité d'instants de fin d'intégration ; et

un moyen de commande (35), connecté audit moyen de minuterie (5) et audit moyen de stockage d'instants (37), pour démarrer ledit moyen intégrateur (30-33) lorsqu'un signal de sortie qui provient dudit moyen de minuterie (5) représente l'un des instants de début d'intégration, pour interrompre un fonctionnement dudit moyen intégrateur (30-33) lorsque la sortie qui provient dudit moyen de minuterie (5) représente l'un des instants de fin d'intégration et pour stocker un résultat d'intégration obtenu au moyen dudit moyen intégrateur (30-33).

14. Dispositif selon la revendication 10, caractérisé en ce que ledit moyen d'intégration comprend :

un moyen d'amplification (21) pour amplifier une valeur absolue d'un signal de sortie (Ea) qui provient dudit moyen de détection de vibration (1) ;

un moyen de génération d'impulsions (30) pour émettre en sortie un signal d'impulsions (Eg) présentant une période prédéterminée ;

un moyen de porte (31, 32), connecté audit moyen d'amplification (21) et audit moyen de génération d'impulsions (30), pour comparer un niveau de signal d'un signal de sortie (Eb) qui provient dudit moyen d'amplification (21) à un niveau de valeur de référence prédéterminé et pour soumettre le signal d'impulsions (Eg) à une logique de porte lorsque le niveau de signal du signal de sortie (Eb) qui provient dudit moyen d'amplification (21) excède le niveau de référence ; et

un moyen de comptage (33) pour compter le nombre d'impulsions incluses dans un signal de sortie (Ed) qui provient dudit moyen de porte (31, 32) pendant la période temporelle prédéterminée.

**Patentansprüche**

1. Wasserleckdetektorapparat mit:

einer Vibrationsdetektoreinrichtung (1) zum Erfassen einer Vibration eines Wasserkanales oder eines akustisch hiermit verbundenen Objektes; und

einer mit der Vibrationsdetektoreinrichtung (1) verbundenen Wasserleckdetektoreinrichtung (13, 15) zum Erfassen einer Anwesenheit/Abwesenheit eines Wasserlecks abhängig von einem Ausgangssignal von der Vibrationsdetektoreinrichtung (1),

dadurch gekennzeichnet, daß

der Wasserleckdetektorapparat außerdem eine mit der Vibrationsdetektoreinrichtung (1) verbundene Frequenzdetektoreinrichtung (14) zum Empfangen des Ausgangssignales der Vibrationsdetektoreinrichtung (1) und zum Erfassen einer Spitzenfrequenz der durch die Vibrationsdetektoreinrichtung (1) erfaßten Vibration innerhalb einer vorbestimmten Zeitdauer aufweist, um so einen Abstand von einer Befestigungsstelle der Vibrationsdetektoreinrichtung (1) bis zu einer Wasserleckposition gemäß einer Beziehung zu ermitteln, die wiedergibt, daß der Abstand im wesentlichen umgekehrt proportional zu der Spitzenfrequenz ist.

2. Apparat nach Anspruch 1, dadurch gekennzeichnet, daß die Wasserleckdetektoreinrichtung aufweist:

eine mit der Vibrationsdetektoreinrichtung (1) verbundene Integriereinrichtung (13) zum Integrieren eines Zeitintervalles, um das ein Vibrationspegel der durch die Vibrationsdetektoreinrichtung (1) erfaßten Vibration einen vorbestimmten Wert innerhalb der vorbestimmten Zeitdauer überschreitet; und

eine Bestimmungseinrichtung (15) zum Vergleichen eines durch die Integriereinrichtung (13) erhaltenen Integrationswertes (R) mit dem voreingestellten Bezugswert (C) und bei Überschreiten des Bezugswertes (C) durch den Integrationswert (R) zum Bestimmen einer Anwesenheit eines Wasserlecks und bei Unterschreiten des Bezugswertes (C) durch den Integrationswert (R) zum Bestimmen einer Abwesenheit eines Wasserlecks, wobei die Frequenzdetektoreinrichtung (14) eine erste Spitzenfrequenz eines Ausgangssignales (Ea) von der Vibrationsdetektoreinrichtung (1) innerhalb der vorbestimmten Zeitdauer erfaßt.

3. Apparat nach Anspruch 1 oder 2, dadurch gekennzeichnet, daß

die Integriereinrichtung (13) die Integration mehrmals durchführt,

die Wasserleckbestimmungseinrichtung (15) mit einem voreingestellten Bezugswert (C) einen Mindestwert von einer Vielzahl von Integrationswerten, die durch die mehrmaligen Integrationen erhalten sind, vergleicht und eine Anwesenheit eines Wasserlecks feststellt, wenn der Mindestwert (R) den Bezugswert (C) überschreitet, und

die Frequenzdetektoreinrichtung (14) die erste Spitzenfrequenz während des vorbestimmten Zeitintervalles erfaßt, in welchem der Mindestwert gemessen wird.

4. Apparat nach einem der Ansprüche 1 bis 3, dadurch gekennzeichnet, daß die Frequenzdetektoreinrichtung (14) eine Einrichtung zum Definieren einer Mittelfrequenz eines Ausgangssignales (Ea) von der Vibrationsdetektoreinrichtung (1) als die erste Spitzenfrequenz und zum Gewinnen der Mittelfrequenz aufweist.

5. Apparat nach einem der Ansprüche 1 bis 4, dadurch gekennzeichnet, daß

die Integriereinrichtung aufweist:

eine Verstärkereinrichtung (21) zum Verstärken eines Absolutwertes eines Ausgangssignales (Ea) von der Vibrationsdetektoreinrichtung (1),

eine Impulssignalgeneratoreinrichtung (40) zum Ausgeben eines Impulssignales (Eg) mit einer vorbestimmten Periode,

eine Vergleichereinrichtung (22) zum Vergleichen eines Signalpegels eines Ausgangssignales (Eb) von der Verstärkereinrichtung (21) mit einem vorbestimmten Bezugspegel und zum Ausgeben eines ein Vergleichsergebnis darstellenden Signales,

eine erste Gatterschaltungseinrichtung (41, 42), die mit der Vergleichereinrichtung (21) verbunden ist, um das Impulssignal (Eg) abhängig von dem das Vergleichsergebnis darstellenden Signal zu tasten, während der Signalpegel den vorbestimmten Bezugspegel innerhalb der vorbestimmten Zeitdauer überschreitet, und

eine erste Zählereinrichtung (43) zum Zählen der Anzahl von Impulsen, die in einem Ausgangssignal von der ersten Gatterschaltungseinrichtung (41, 42) enthalten sind, und

die Frequenzdetektoreinrichtung aufweist:

eine zweite Gatterschaltungseinrichtung (41, 42), die mit der Vergleichereinrichtung (21) verbunden ist, um das das Vergleichsergebnis darstellende Signal (Ec) innerhalb der vorbestimmten Zeitdauer zu tasten,

eine zweite Zählereinrichtung (46), die mit der zweiten Gatterschaltungseinrichtung (41, 42) verbunden ist, um die Anzahl der in einem Ausgangssignal von der zweiten Gatterschaltungseinrichtung (41, 42) enthaltenen Impulse zu zählen, und

eine Einrichtung (47) zum Dividieren einer Zahl der zweiten Zählereinrichtung (46) durch einen zweifachen Wert der vorbestimmten Zeitdauer und zum Gewinnen der Mittelfrequenz, wobei die gewonnene Mittelfrequenz als die erste Spitzenfrequenz angesehen wird.

6. Apparat nach einem der Ansprüche 1 bis 3, dadurch gekennzeichnet, daß die Bestimmungseinrichtung (15) einen Mindestwert (Rmin) von n Integrationswerten (Ri) wählt, die durch die n-fache Integration erhalten sind, wann immer die Integriereinrichtung (13) die Integration n-fach ausführt, den Mindestwert (Rmin) mit dem voreingestellten Bezugswert (C) vergleicht und die Anwesenheit eines Wasserlecks, wenn der Mindestwert (Rmin) den voreingestellten Bezugswert (C) überschreitet, und die Abwesenheit eines Wasserlecks, wenn der Mindestwert (Rmin) kleiner ist als der voreingestellte Bezugswert (C), feststellt.

7. Apparat nach Anspruch 6, dadurch gekennzeichnet, daß die n-fache Integration einen laufenden Integrationszyklus umfaßt, wann immer die Integration der Integriereinrichtung (13) abgeschlossen ist.

8. Apparat nach einem der Ansprüche 1 bis 4, dadurch gekennzeichnet, daß die Integriereinrichtung aufweist:

eine Verstärkereinrichtung (21) zum Verstärken eines Absolutwertes eines Ausgangssignales (Ea) der Vibrationsdetektoreinrichtung (1);

eine mit der Verstärkereinrichtung (21) verbundene Vergleichereinrichtung (22) zum Vergleichen eines Signalpegels eines Ausgangssignales (Eb) von der Verstärkereinrichtung (21) mit einem vorbestimmten Bezugspegel und zum Ausgeben eines ein Vergleichsergebnis darstellenden Signales (Ec);

eine Integratoreinrichtung (30 - 33), die mit dem Ausgangssignal (Ea) von der Vergleichseinrichtung (22) beaufschlagt ist und auf das Ausgangssignal (Ea) von der Vergleichseinrichtung (22) anspricht, um ein Zeitintervall zu integrieren, für das das Ausgangssignal (Eb) von der Verstärkereinrichtung (21) die Bezugspegel überschreitet;

eine Zeitgebereinrichtung (5) zum Messen eines Zeitablaufes;

eine mit der Zeitgebereinrichtung (5) verbundene Einrichtung (37) zum Speichern einer Vielzahl von Integrationsstartzeitpunkten und einer Vielzahl von Integrationsendzeitpunkten; und

eine mit der Zeitgebereinrichtung (5) und der Zeittaktspeichereinrichtung (37) verbundene Steuereinrichtung (35) zum Starten der Integratoreinrichtung (30 - 33), wenn ein Ausgangssignal von der Zeitgebereinrichtung (5) einen der Integrationsstartzeitpunkte darstellt, zum Unterbrechen eines Betriebs der Integratoreinrichtung (30 - 33), wenn das Ausgangssignal von der Zeitgebereinrichtung (5) einen der Integrationsendzeitpunkte darstellt, und zum Speichern eines durch die Integratoreinrichtung (30 - 33) erhaltenen Integrationsergebnisses.

9. Apparat nach einem der Ansprüche 1 bis 4, dadurch gekennzeichnet, daß die Integriereinrichtung aufweist:

eine Verstärkereinrichtung (21) zum Verstärken eines Absolutwertes eines Ausgangssignales (Ea) von der Vibrationsdetektoreinrichtung (1),

eine Impulsgeneratoreinrichtung (30) zum Ausgeben eines Impulssignales (Eg) mit einer vorbestimmten Periode;

eine mit der Verstärkereinrichtung (21) und der Impulsgeneratoreinrichtung (30) verbundene Gattereinrichtung (31, 32) zum Vergleichen eines Signalpegels eines Ausgangssignales (Eb) von der Verstärkereinrichtung (21) mit einem vorbestimmten Bezugswertpegel und zum Tasten des Impulssignales (Eg), wenn der Signalpegel des Ausgangssignales (Eb) von der Verstärkereinrichtung (21) den Bezugspegel überschreitet; und

eine Zählereinrichtung (33) zum Zählen der Anzahl der in einem Ausgangssignal (Ed) von der Gattereinrichtung (31, 32) innerhalb der vorbestimmten Zeitdauer enthaltenen Impulse.

10. Wasserleckdetektorapparat mit:

einer Vibrationsdetektoreinrichtung (1) zum Erfassen einer aufgrund eines Wasserlecks erzeugten Vibration;

einer mit der Detektoreinrichtung (1) verbundenen Integriereinrichtung (2, 3) zum Integrieren eines Zeitintervalles, für das ein Vibrationspegel der durch die Detektoreinrichtung (1) erfaßten Vibration einen vorbestimmten Wert innerhalb einer vorbestimmten Zeitdauer überschreitet; und

einer Bestimmungseinrichtung (4) zum Vergleichen eines Integrationswertes mit einem voreingestellten Bezugswert und bei Überschreiten des voreingestellten Bezugswertes durch den Integrationswert zum Bestimmen einer Anwesenheit eines Wasserlecks und bei Unterschreiten des voreingestellten Bezugswertes durch den Integrationswert zum Bestimmen einer Abwesenheit eines Wasserlecks;

dadurch gekennzeichnet, daß

die Integriereinrichtung (2, 3) die Integration mehrmals durchführt, um eine Vielzahl von Integrationswerten zu erhalten; und

die Bestimmungseinrichtung (4) die Vielzahl von durch die Integriereinrichtung (2, 3) berechneten Integrationswerten (Ri) empfängt, einen Mindestwert (Rmin) der Vielzahl von Integrationswerten (Ri) als einen Integrationswert wählt, der erhalten ist, wenn der Einfluß von Rauschen minimal ist, den gewählten Mindestwert (Rmin) mit einem voreingestellten Bezugswert (C) vergleicht und die Anwesenheit eines Wasserlecks, wenn der Mindestwert (Rmin) den Bezugswert (C) überschreitet, und die Abwesenheit eines Wasserlecks, wenn der Mindestwert (Rmin) kleiner ist als der Bezugswert (C), feststellt.

11. Apparat nach Anspruch 10, dadurch gekennzeichnet, daß die Bestimmungseinrichtung (4) einen Mindestwert (Rmin) von n Integrationswerten (Ri) auswählt, die durch die n-fache Integration erhalten sind, wann immer die Integriereinrichtung (2, 3) die Integration n-fach ausführt, den Mindestwert (Rmin) mit dem voreingestellten Bezugswert (C) vergleicht und die Anwesenheit eines Wasserlecks, wenn der Mindestwert (Rmin) den voreingestellten Bezugswert (C) überschreitet, und die Abwesenheit eines Wasserlecks, wenn der Mindestwert (Rmin) kleiner ist als der voreingestellte Bezugswert (C), feststellt.

12. Apparat nach Anspruch 10, dadurch gekennzeichnet, daß die Bestimmungseinrichtung (4) einen Mindestwert (Rmin) von m Integrationswerten (Ri) auswählt, die durch m-fache Integration einschließlich eines laufenden Integrationszyklus erhalten sind, wann immer die Integration der Integriereinrichtung (2, 3) abgeschlossen ist, den Mindestwert (Rmin) mit dem voreingestellten Bezugswert (C) vergleicht und die Anwesenheit eines Wasserlecks, wenn der Mindestwert (Rmin) den voreingestellten Bezugswert (C) überschreitet, und die Abwesenheit eines Wasserlecks, wenn der Mindestwert (Rmin) kleiner ist als der voreingestellte Bezugswert (C), feststellt.

13. Apparat nach Anspruch 10, dadurch gekennzeichnet, daß die Integriereinrichtung aufweist:

eine Verstärkereinrichtung (21) zum Verstärken eines Absolutwertes eines Ausgangssignales (Ea) der Vibrationsdetektoreinrichtung (1);

eine mit der Verstärkereinrichtung (21) verbundene Vergleichereinrichtung (22) zum Vergleichen eines Signalpegels eines Ausgangssignales (Eb) von der Verstärkereinrichtung (21) mit einem vorbestimmten Bezugspegel und zum Ausgeben eines ein Vergleichsergebnis darstellenden Signales (Ec);

eine Integratoreinrichtung (30 - 33), die mit dem Ausgangssignal (Ea) von der Vergleichereinrichtung (22) beaufschlagt ist und auf das Ausgangssignal (Ea) von der Vergleichereinrichtung (22) anspricht, um ein Zeitintervall zu integrieren, während dem das Ausgangssignal (Eb) von der Verstärkereinrichtung (21) den Bezugspegel überschreitet;

eine Zeitgebereinrichtung (5) zum Messen eines Zeitablaufes;

eine mit der Zeitgebereinrichtung (5) verbundene Einrichtung (37) zum Speichern einer Vielzahl von Integrationsstartzeitpunkten und einer Vielzahl von Integrationsendzeitpunkten; und

eine mit der Zeitgebereinrichtung (5) und der Zeittaktspeichereinrichtung (37) verbundene Steuereinrichtung (35) zum Starten der Integratoreinrichtung (30 - 33), wenn ein Ausgangssignal von der Zeitgebereinrichtung (5) einen der Integrationsstartzeitpunkte darstellt, zum Unterbrechen einer Operation der Integratoreinrichtung (30 - 33), wenn das Ausgangssignal von der Zeitgebereinrichtung (5) einen der Integrationsendzeitpunkte darstellt, und zum Speichern eines durch die Integratoreinrichtung (30 - 33) erhaltenen Integrationsergebnisses.

14. Apparat nach Anspruch 10, dadurch gekennzeichnet, daß die Integriereinrichtung aufweist:

eine Verstärkereinrichtung (21) zum Verstärken eines Absolutwertes eines Ausgangssignales (Ea) der Vibrationsdetektoreinrichtung (1);

eine Impulsgeneratoreinrichtung (30) zum Ausgeben eines eine vorbestimmte Periode aufweisenden Impulssignales (Eg);

eine mit der Verstärkereinrichtung (21) und der Impulsgeneratoreinrichtung (30) verbundene Gattereinrichtung (31, 32) zum Vergleichen eines Signalpegels eines Ausgangssignales (Eb) von der Verstärkereinrichtung (21) mit einem vorbestimmten Bezugswertpegel und zum Tasten des Impulssignales (Eg), wenn der Signalpegel des Ausgangssignales (Eb) von der Verstärkereinrichtung (21) den Bezugspegel üerschreitet; und

eine Zählereinrichtung (33) zum Zählen der Anzahl der in einem Ausgangssignal (Ed) von der Gattereinrichtung (31, 32) innerhalb der vorbestimmten Zeitdauer enthaltenen Impulse.

F I G. 1

F I G. 6

F I G.  2

F I G. 3A

Ea

F I G. 3B

Er

Eb

F I G. 3C

Ec

F I G. 3D

Ed

F I G. 3E

INI

F I G. 3F

INO

F I G. 3G

Ef

F I G. 3H

DIO

F I G. 4

EP 0 300 460 B1

Flowchart:

START

↓

S0

↓

$A_j \rightarrow A_{j-1}$
$(j = 1, \cdots, m)$ — S13

↓

$R\ min \rightarrow A\ m$ — S14

↓

S15
$min\ (A_1, A_2, \cdots A_m) > C$ ?

→ N → DETERMINE ABSENCE OF WATER LEAKAGE — S10

↓ Y

DETERMINE PRESENCE OF WATER LEAKAGE — S11

↓

INITIALIZATION OF R min — S12

↓

RETURN

F I G. 5

23

F I G. 7

F I G. 8